# EUROPÄISCHE PATENTSCHRIFT

(11) **EP 0 800 884 B1**
(45) Veröffentlichungstag und Bekanntmachung des Hinweises auf die Patenterteilung: **12.09.2001**
(21) Anmeldenummer: 97105874.8
(22) Anmeldetag: 10.04.1997
(51) Int. Cl.: B23B 31/16, B23B 31/40

(54) **Werkstückspannvorrichtung**
Workpiece clamping device
Dispositif de serrage de pièces à usiner

(30) Priorität: 10.04.1996 DE 29606504 U
(43) Veröffentlichungstag der Anmeldung: 15.10.1997
(73) Patentinhaber: Christ-Noss, Marianne, 65307 Bad Schwalbach (DE)
(72) Erfinder: Christ-Noss, Marianne, 65307 Bad Schwalbach (DE)
(74) Vertreter: Blumbach, Kramer & Partner GbR

(56) Entgegenhaltungen:
- GB-A- 951 978
- GB-A- 2 109 714
- US-A- 2 948 541

## Beschreibung

Zur Bearbeitung von Werkstücken müssen diese eingespannt werden, und es gibt eine große Anzahl solcher Werkstückeinspannvorrichtungen, wobei sehr unterschiedliche Forderungen zu erfüllen sind. Eine häufig auftretende Anforderung besteht darin, das zu bearbeitende Werkstück symmetrisch zu einer Drehachse einzuspannen, auch wenn noch keine bearbeitete Fläche des Werkstücks vorliegt, welche eine derartige Ausrichtung ohne weiteres ermöglichen würde. Eine weitere Forderung besteht darin, das Werkstück so einzuspannen, daß es nicht übermäßig deformiert wird, und doch ausreichende Einspannkräfte auf das Werkstück aufzubringen, wie dies bei einer Bearbeitung notwendig ist. Eine Werkstückspannvorrichtung mit den Merkmalen des Oberbegriffs des Anspruches 1 ist aus der GB-A-2 109 714 bekannt. Es sind eine Reihe individueller Einstellkolben und ein gemeinsamer Druckkolben zum Antrieb der Bewegungskeile und damit der Spannbacken vorgesehen. Die inviduellen Einstellkolben werden über eine gesonderte Druckzuführung beaufschlagt, um das Werkstück zunächst exzentrisch einzuspannen, wonach zugeordnete Druckbegrenzungsventile ansprechen, bis eine gleichmäßige Druckverteilung erreicht ist, die als zentrisches Spannen gilt. Ein Voreinstellstange zur Voreinstellung der Spannmittel und Zufuhr von Druckmittel ist nicht vorgesehen.

Der Erfindung liegt die Aufgabe zugrunde, eine Werkstückspannvorrichtung vorzuschlagen, die den erörterten Forderungen der symetrischen Einspannung des Werkstückes und der Vermeidung übermässiger Einspannkräfte genügt.

Die gestellte Aufgabe wird aufgrund der Maßnahmen des Ansprüches 1 gelöst und durch die weiteren Merkmale der Unteransprüche ausgestaltet und weiterentwickelt.

Im einzelnen ist ein Gehäuse vorgesehen, an dem eine Anzahl von Spannbacken radial geführt ist. Wenn die Spannrichtung nach innen erfolgt, spricht man von Backenfutter, wenn die Spannrichtung nach außen erfolgt, von einem Spanndorn. Den Spannbacken sind Bewegungskeile zugeordnet, die in Achsrichtung geführt und antreibbar sind, um die Spannbacken radial nach innen oder außen zu bewegen. Dabei unternimmt die Spannvorrichtung gewissermaßen einen Tastschritt, d. h. die Spannbacken werden an den Innen- oder Außenumfang des einzuspannenden Werkstückes herangeführt, und in einem zweiten Schritt erfolgt dann die Einspannung mit allen Spannbacken gleichzeitig. Wenn das Werkstück unrund sein sollte, bedeutet dies, daß die Ausfahrlänge der Spannbacken vor dem mit Kraft erfolgenden Einspannen unterschiedlich ist, jedoch werden die Spannkräfte trotz dieser unsymmetrischen Ausgangslage völlig symmetrisch aufgebracht und so das Werkstück gleichmäßig eingespannt.

Ein Ausführungsbeispiel der Erfindung wird anhand der Zeichnung beschrieben. Dabei zeigt:
- Fig. 1: einen Längsschnitt durch einen ausgleichendenn Spanndorn, dessen linke Hälfte die gelöste Stellung und dessen rechte Hälfte die gespannte Stellung darstellen, und
- Fig. 2: den Längsschnitt durch ein ausgleichendes Backenfutter, dessen obere Hälfte die gelöste Stellung und dessen untere Hälfte die gespannte Stellung skizzieren.

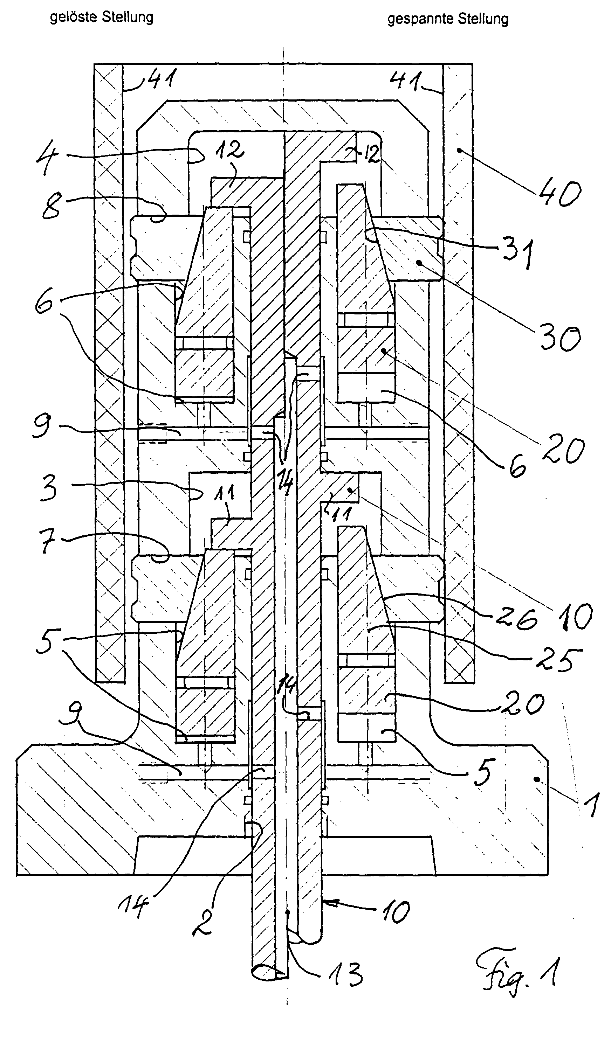

Es wird Bezug auf Fig. 1 genommen. Das Gehäuse 1 ist schematisch dargestellt und in Wirklichkeit aus mehreren Komponenten zusammengebaut. Entlang der Symmetrieachse verläuft eine Führungsbohrung 2, die zu einem ersten und zweiten Raum 3, 4 führt, von denen kranzartig angeordnete Zylinderräume 5, 6 ausgehen. In die Räume 3, 4 führen ferner radiale Durchbrüche 7, 8 hinein. Das Gehäuse 1 beherbergt auch Druckmittelkanäle 9, die von der zentralen Bohrung 2 zu den Zylinderräumen 5, 6 führen.

In der zentralen Bohrung 2 ist eine Voreinstellstange 10 geführt, die Anschlagseinrichtungen 11, 12 aufweist, welche jeweils als Bund oder Vorsprung ausgebildet sein können und sich in den Räumen 3 bzw. 4 befinden, so daß die Voreinstellstange 10 die beiden in der Zeichnung dargestellten Stellungen einnehmen kann. Die Stange 10 weist ferner eine Druckmittelzuführbohrung 13 auf, von der aus Querkanäle 14 zu den Druckmittelkanälen 9 hinführen.

In jeder Zylinderbohrung 5, 6 sitzt ein Spannkolben 20. Es werden zwei Kränze zu je sechs Kolben 20 gebildet (je nach Anwendung kann die Anzahl größer oder kleiner sein und von drei bis zwölf und mehr reichen). Mit jedem Spannkolben 20 ist ein Bewegungskeil 25 verbunden, dessen Schrägfläche 26 einen Winkel von 15° gegenüber der Achsrichtung einnimmt. An den Bewegungskeilen 25 liegen Spannbacken 30 mit ihren Schrägflächen 31 an, wobei sich die Spannbacken 30 in zwei Kränzen durch die Reihe der Aussparungen 7 bzw. 8 erstrecken. Die Anzahl der Spannbacken 30 entspricht der Anzahl der Bewegungskeile und der Anzahl der Spannkolben.

Zur Vorbereitung der Einspannung eines Werkstücks 40 wird der Spanndorn in seine Ausgangsstellung gebracht, die links in Fig. 1 dargestellt ist. Wie ersichtlich, sind dabei die Spannbacken 30 zurückgefahren, weil die Bewegungskeile 25 mit Hilfe der Voreinstellstange 10 in ihre zurückgezogene Stellung zurückgeschoben worden sind. In der zurückgezogenen Stellung der Spannbacken 30 kann man das Werkstück 40 leicht so plazieren, wie man es wünscht. Alsdann wird die Voreinstellstange 10 vorgeschoben, wodurch sich die Vorsprünge 11, 12 in ihren Räumen 3, 4 in der Zeichnung nach oben bewegen, wodurch die Spannkolben 20 und damit auch die Bewegungskeile 25 nachfolgen können, wenn man mit etwas Fluiddruck in den Leitungen 9, 13 nachhilft. Ein Öldruck von 3 bis 6 bar kann angewendet werden. Im Verlaufe der Bewegung der Voreinstellstange 10 gelangen zwei der Spannbacken 30 zur Anlage auf der Innenseite 41 des Werkstücks 40 und richten dieses demgemäß aus. Trotz weiter zurückweichendem Vorsprung 11 oder 12 kann der Bewegungskeil 25 nicht weiter folgen, weil dies durch die Spannbacken verhindert wird, die an dem Werkstück anliegen. Beim weiteren Zurückweichen der Vorsprünge 11, 12 gelangen immer mehr Bewegungskeile in Anlage an solche Spannbacken, die ihre Anlage an der Innenseite 41 des Werkstücks gefunden haben. Sobald dies geschehen ist, ist die Einspannvorbereitung des Werkstücks beendet. Das Werkstück 40 wird mit mäßiger Kraft festgehalten, wobei alle Spannbacken 30 mit der gleichen Kraft beaufschlagt sind, die von dem zugeführten Öldruck von etwa 3 bis 6 bar abhängt.

Zum endgültigen Festspannen wird nunmehr die zur Werkstückbearbeitung erforderliche Spannkraft aufgebracht, beispielsweise durch Zufuhr von 60 bar Öldruck auf die Spannkolben 20. Wegen der gleichmäßigen Anlage der Spannbacken 30 wird eine Verzerrung des Werkstücks weitgehend vermieden.

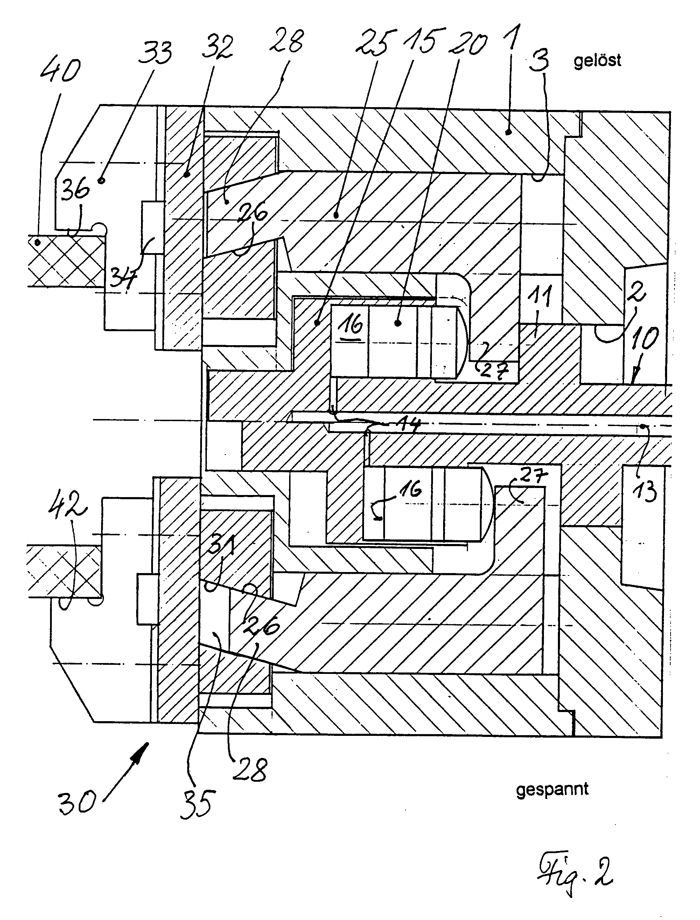

Fig. 2 zeigt eine weitere Ausführungsform der Werkstückspannvorrichtung als zentrierendes, ausgleichendes Sechs-Backenfutter. Funktionsgleiche Teile werden mit den gleichen Bezugszeichen belegt.

Das Gehäuse 1 weist die zentrale Führungsbohrung 2, jedoch nur einen zentralen Raum 3 auf. Die Voreinstellstange 10 weist neben dem Vorsprung 11 und der Ölzufuhrleitung 13 mit Abzweigungen 14 noch einen Zylinderkopf 15 auf, in welchen sich eine Reihe von Zylindern 16 axial erstrecken (bei einem Sechs-Backenfutter sind es sechs Zylinder 16). Die Spannkolben 20 sind in diesen Zylindern 16 angepaßt geführt. Die Bewegungskeile 25 weisen Flanschfortsätze 27 auf, an denen jeweils ein Spannkolben 20 anliegt. Die Schrägflächen 26 der Bewegungskeile gehören jeweiligen Segmenten 28 einer Konusringwand an. Die Spannbacken 30 sind jeweils zweiteilig ausgeführt und enthalten jeweils einen Grundbacken 32 und einen Futterbacken 33, die über einen Zapfen 34 miteinander gekoppelt sind. Im Grundbacken 32 ist eine Aussparung 35 passend zur Aufnahme der Konusringwand 28 vorgesehen.

Abgesehen von der unterschiedlichen Spannrichtung (radial nach innen anstelle radial nach außen) ist die Funktionsweise der Vorrichtung nach Fig. 2 ähnlich zu der nach Fig. 1. Die erste Stellung der Voreinstellstange zum Lösen ist in Fig. 2, obere Bildhälfte, dargestellt. Der Vorsprung 11 liegt am Flansch 27 des Bewegungskeils 25 an, und die Konusringwand 28 ist maximal in die Aussparung 35 eingedrungen, so daß die Spannbacke 30 ihre radial äußerste Stellung einnimmt. Die Außenseite 42 des Werkstücks 40 ist deshalb von der Spannfläche 36 des Spannfutters 30 frei.

Wenn nunmehr die Voreinstellstange 10 in ihre zweite Lage gefahren wird, die in der unteren Bildhälfte dargestellt ist, und etwas Fluiddruck über die Kanäle 13, 14 zugeführt wird, bewegt der Kolben 20 den Bewegungskeil 25 in der Zeichnung nach rechts, wodurch wegen des Eingriffs der Schrägflächen 26/31 die Spannbacke 30 radial nach innen verschoben wird, bis die Spannfläche 26 an der Außenseite 42 des Werkstücks 40 anliegt. Bei noch weitergeführter Bewegung der Voreinstellstange 10 wird infolge der Reaktionskraft der Kolben 20 weiter in den Zylinderraum 16 hineingedrückt. Der über die Leitung 13 zugeführte Druck entspricht also der Reaktionskraft am Werkstück und kann ausreichend klein gehalten werden.

Wenn alle Spannbacken sich an das Werkstück 40 angelegt haben, kann das eigentliche Spannen des Werkstücks erfolgen. Hierzu wird ein Druck von 60 bar oder dergleichen den Kolben 20 zugeführt, wodurch sich die Reaktionskraft am Werkstück dementsprechend erhöht, jedoch an allen Spannbacken gleichmäßig.

Die dargestellte Ausbildung der Spannbacken ist nicht zwingend. Beispielsweise können auch Pendelbacken eingesetzt werden, bei denen sich die Anzahl der Krafteinleitungsstellen verdoppelt, was zu einem schonenderen Einspannen des Werkstücks führt.

## Patentansprüche

1. Werkstückspannvorrichtung mit folgenden Merkmalen:
ein Gehäuse (1) mit Hohlräumen (3, 4) und Führungen, welche eine Achsrichtung und eine Anzahl radialer Richtungen definieren;eine Anzahl Bewegungskeile (25), die im Gehäuse verteilt angeordnet und in Achsrichtung geführt sind;
eine Anzahl Spannbacken (30), die in diversen radialen Richtungen geführt sind und jeweils mit zugehörigen Bewegungskeilen (25) zusammenarbeiten, wobei die axiale Stellung jedes Bewegungskeils (25) die radiale Stellung der zugehörigen Spannbacke (30) bestimmt;
eine der Anzahl der Bewegungskeile entsprechende Anzahl von Spannkolben (20), die bei Druckmittelzufuhr jeweils einen Bewegungskeil (25) in axialer Richtung beaufschlagen und damit die zugehörigen Spannbacken (30) radial spannen, **dadurch gekennzeichnet**,
daß eine Voreinstellstange (10)in dem Gehäuse zwischen einer ersten Stellung zum Lösen und einer zweiten Stellung zur Einspannvorbereitung verschiebbar ist und Anschlagseinrichtungen (11, 12) aufweist;
daß die Voreinstellstange (10) Zufuhrkanäle (13, 14) für das Druckmittel zu den Spannkolben (20) aufweist, die vorzugsweise symmetrisch um die Voreinstellstange herum angeordnet sind, und
daß die Bewegungskeile (25) normalerweise an ihrer zugeordneten Anschlagseinrichtung (11, 12) liegen, sofern nicht die Reaktionskraft zwischen Werkstück (40) und zugehöriger Spannbacke (30) zu einem Abheben des betreffenden Bewegungskeils (25) von der zugeordneten Anschlagseinrichtung (11, 12) führt.

2. Spannvorrichtung nach Anspruch 1,
**dadurch gekennzeichnet, daß** den Spannkolben (20) zur Einspannungsvorbereitung Druckmittel mit mäßigem Druck und zum eindgültigen Festspannen Druckmittel mit höherem Druck zuführbar ist.

3. Spannvorrichtung nach Anspruch 1 oder 2,
**dadurch gekennzeichnet, daß** die Voreinstellstange (10) mit Zylinderräumen (16) zur Aufnahme der Spannkolben (20) versehen ist.

4. Spannvorrichtung nach Anspruch 1 oder 2,
**dadurch gekennzeichnet, daß** das Gehäuse (1) mit Zylinderräumen (5, 6) zur Aufnahme der Spannkolben (20) versehen ist.

5. Spannvorrichtung nach einem der Ansprüche 1 bis 4,
**dadurch gekennzeichnet, daß** die Bewegungskeile (25) jeweils einen Flansch (27) zur Anlage an einem zugehörigen Spannkolben (20) aufweissen.

6. Spannvorrichtung nach einem der Ansprüche 1 bis 5,
**dadurch gekennzeichnet, daß** die Bewegungskeile (25) jeweils ein Segment einer Konusringwand (28) aufweisen, mit der sie jeweils in Eingriff mit einer entsprechend geformten Aussparung (35) in der Spannbacke (30) stehen.

7. Spannvorrichtung nach einem der Ansprüche 1 bis 4,
**dadurch gekennzeichnet, daß** die Spannkolben (20) und Bewegungskeile (25) unmittelbar miteinander verbunden sind.

8. Spannvorrichtung nach Anspruch 7,
**dadurch gekennzeichnet, daß** zwei Kranzreihen von Spannkolben (20) und Bewegungskeilen (25) vorgesehen sind, um zwei Kranzreihen von Spannbacken (30) zu betätigen.

## Claims

1. A workpiece clamping device having the following features: a casing (1) with cavities (3, 4) and guides which define an axial direction and a number of radial directions; a number of motion wedges (25) distributed in the casing and guided in the axial direction; a number of clamping jaws (30) guided in various radial directions and each cooperating with associated motion wedges (25), the axial position of each wedge (25) determining the radial position of the associated clamping jaw (30), and a number of clamping pistons (20) corresponding to the number of motion wedges and each acting upon a motion wedge (25) in the axial direction when supplied with pressure medium and thus radially clamping the associated clamping jaws (30), **characterised in that**
a pre-adjustment rod (10) is movable in the casing between a first position for releasing and a second position in preparation for clamping and has stop means (11, 12);
in that the pre-adjustment rod (10) has ducts (13, 14) for supplying the pressure medium to the clamping pistons (20), the ducts being preferably disposed symmetrically around the pre-adjustment rod, and
in that the motion wedges (25) normally abut their associated stop means (11, 12) unless the reaction force between the workpiece (40) and the associated clamping jaw (30) lifts the associated motion wedge (25) off the associated stop means (11, 12).

2. A clamping device according to claim 1, **characterised in that** the clamping pistons (20) can be supplied with pressure medium at moderate pressure in preparation for clamping and at higher pressure for final clamping.

3. A clamping device according to claim 1 or 2, **characterised in that** the pre-adjustment rod (10) has cylinder chambers (16) for receiving the clamping pistons (20).

4. A clamping device according to claim 1 or 2, **characterised in that** the casing (1) has cylindrical chambers (5, 6) for receiving the clamping pistons (20).

5. A clamping device according to any of claims 1 to 4, **characterised in that** the motion wedges (25) each have a flange (27) for abutting against an associated clamping jaw (20).

6. A clamping device according to any of claims 1 to 5, **characterised in that** the motion wedges (25) each comprise a segment of an annular conical wall (28) via which they each engage a correspondingly shaped recess (35) in the clamping jaw (30).

7. A clamping device according to any of claims 1 to 4, **characterised in that** the clamping pistons (20) and the motion wedges (25) are directly interconnected.

8. A clamping device according to claim 7, **characterised in that** two circular rows of clamping pistons (20) and motion wedges (25) are provided in order to actuate two circular rows of clamping jaws (30).

## Revendications

1. Dispositif de serrage de pièce présentant les caractéristiques suivantes :
un corps (1) présentant des cavités (3, 4) et des guides, qui définissent une direction axiale et un certain nombre de directions radiales ;
un certain nombre de coins de déplacement (25) qui sont disposés répartis dans le corps et guidés dans la direction axiale ;
un certain nombre de mors (30) qui sont guidés dans diverses directions radiales et coopèrent respectivement avec des coins de déplacement correspondants (25), la position axiale de chaque coin de déplacement (25) déterminant la position radiale du mors (30) correspondant ;
un nombre de pistons de serrage (20), correspondant au nombre des coins de déplacement, ces pistons sollicitant chacun un coin de déplacement (25) dans la direction axiale en réponse à une amenée d'un fluide sous pression et serrant ainsi radialement les mors (30) correspondants, caractérisé
en ce qu'une tige de préréglage (10) peut être déplacée en translation dans le corps entre une première position, pour le desserrage, et une deuxième position, pour la préparation au serrage, et présente des dispositifs de butée (11, 12) ;
en ce que la tige de préréglage (10) présente des canaux d'amenée (13, 14) pour amener le fluide sous pression aux pistons de serrage (20), lesquels sont disposés de préférence symétriquement autour de la tige de préréglage, et
en ce que les coins de déplacement (25) se trouvent normalement en appui contre leur dispositif de butée correspondant (11, 12) aussi longtemps que la force de réaction entre la pièce (40) et le mors (30) correspondant ne conduit pas à soulever le coin de déplacement (25) correspondant du dispositif de butée (11,12) correspondant.

2. Dispositif de serrage selon la revendication 1,
**caractérisé en ce qu'**un fluide sous pression peut être envoyé aux pistons de serrage (20), sous une pression modérée pour la préparation du serrage, et sous une pression plus élevée, pour le serrage bloqué définitif.

3. Dispositif de serrage selon la revendication 1 ou 2,
**caractérisé en ce que** la tige de préréglage (10) est munie de chambres de cylindres (16) destinées à recevoir les pistons de serrage (20).

4. Dispositif de serrage selon la revendication 1 ou 2,
**caractérisé en ce que** le corps (1) est muni de chambres de cylindres (5, 6) destinées à recevoir les pistons de serrage (20).

5. Dispositif de serrage selon une des revendications 1 à 4,
**caractérisé en ce que** les coins de déplacement (25) présentent chacun une collerette (27) destinée à s'appuyer contre un piston de serrage (20) correspondant.

6. Dispositif de serrage selon une des revendications 1 à 5,
**caractérisé en ce que** les coins de déplacement (25) présentent chacun un segment d'une paroi annulaire conique (28) par laquelle ils sont respectivement en prise avec une fenêtre (35) du mors de serrage (30) qui est de forme correspondante.

7. Dispositif de serrage selon une des revendications 1 à 4,
**caractérisé en ce que** les pistons de serrage (20) et les coins de déplacement (25) sont directement reliés les uns aux autres.

8. Dispositif de serrage selon la revendication 7,
**caractérisé en ce qu'**il est prévu deux couronnes de pistons de serrage (20) et de coins de déplacement (25) pour actionner deux couronnes de mors de serrage (30).
